## Europäisches Patentamt
## European Patent Office
## Office européen des brevets

(19)

(11) Publication number: **0 005 076**
**B1**

(12) **EUROPEAN PATENT SPECIFICATION**

(45) Date of publication of patent specification: **04.07.84**

(51) Int. Cl.³: **F 16 G 5/06, B 29 H 7/22**

(21) Application number: **79300691.7**

(22) Date of filing: **25.04.79**

(54) **Self-adjusting V-belt.**

(30) Priority: **26.04.78 JP 50671/78**

(43) Date of publication of application:
**31.10.79 Bulletin 79/22**

(45) Publication of the grant of the patent:
**04.07.84 Bulletin 84/27**

(84) Designated Contracting States:
**CH DE FR GB IT NL SE**

(56) References cited:
**AU - B - 408 360**
**BE - A - 642 435**
**DE - B - 1 107 033**
**FR - A - 2 006 655**
**FR - A - 2 268 627**
**FR - A - 2 350 515**
**GB - A - 727 101**
**US - A - 2 430 500**
**US - A - 3 078 206**
**US - A - 3 349 634**
**US - A - 3 469 001**
**US - A - 3 584 516**
**US - A - 3 772 117**
**US - A - 3 872 735**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Takano, Hiroshi**
**No. 2-543, Higashi Jiyugaoka Shijimi-cho**
**Miki-shi Hyogo (JP)**

(74) Representative: **Cooper, Derek Robert et al,**
**Marks & Clerk Alpha Tower Suffolk Street**
**Queensway**
**Birmingham B1 1TT (GB)**

Courier Press, Leamington Spa, England.

# Description

This invention relates to a V-belt of the type comprising a compression section formed by a rubber layer, a tension section formed by a rubber layer laminated onto the rubber layer of the compression section, a plurality of ridges on a surface of the tension section remote from the compression section and extending transversely of the V-belt, a canvas covering which is disposed over the ridges and the recesses therebetween and which is stretchable longitudinally of the V-belt, and elongate tensile portions embedded in the V-belt and extending longitudinally thereof in mutually parallel, equispaced relation. Such a V-belt is disclosed in US—A—2430500, for example.

Wrapping connector driving belts (such as flat belts, V-belts and poly-V-belts) serve, in general, to transmit power between pulleys or the like through frictional force, and therefore the belt needs to be pre-tensioned according to the operating conditions. If the belt becomes elongated and its tension is decreased during operation, then the gripping force of the belt on the pulleys or the like is decreased, as a result of which the belt slips. Such slipping of the belt causes heat to be generated therein resulting in the belt becoming further elongated while the degree of slip of the belt is also further increased. The heat thus generated may also result in the belt being broken earlier than its normal service life. Accordingly, in order to improve the durability of the belt, it should become elongated to a negligible extent during operation so that a tension can be maintained which is higher than a threshold value at which slipping occurs.

Recently, a technical concept has been studied with interest in which an elongate member having high thermal contraction stress is employed to form the tensile portions of the belt, so that when heat is generated in the belt the elongate member reacts quickly to contract the belt and thereby suppress elongation thereof. An example of such an elongate member is a synthetic fibre rope made of, for instance, polyester fibre. Belts of this type are normally manufactured *inter alia* by spirally winding the elongate member around a cylindrical drum or metal mould and over a rubber layer which is subsequently to be vulcanized. During manufacture of the belt, thermal elongation treatment of the elongate member is extensively carried out in order to reduce the elongation thereof before actual moulding of the belt. However, as the degree of thermal elongation treatment is increased, the thermal contraction stress of the elongate member produced during vulcanization operation is also increased. Accordingly, during the vulcanization operation the elongate member contracts radially of the belt and passes through or "drops" in the rubber layer, as a result of which the contraction stress of the elongate member becomes lessened. The resultant belt is therefore high in elongation. At worst, the elongate member is disturbed within the rubber layer and it is difficult to maintain equal spacing between the windings thereof.

The above-described difficulties will now be explained in greater detail with reference to Figures 1 to 5 of the accompanying drawings, in which:—

Figure 1 illustrates a first conventional method of manufacturing a belt of the type described above;

Figure 2 is a section through a belt manufactured by the method of Figure 1;

Figure 3 is a section through an alternative form of belt of the type described above;

Figure 4 illustrates a second conventional method of manufacturing a belt of the type described above; and

Figure 5 is a section through a belt manufactured by the method of Figure 4.

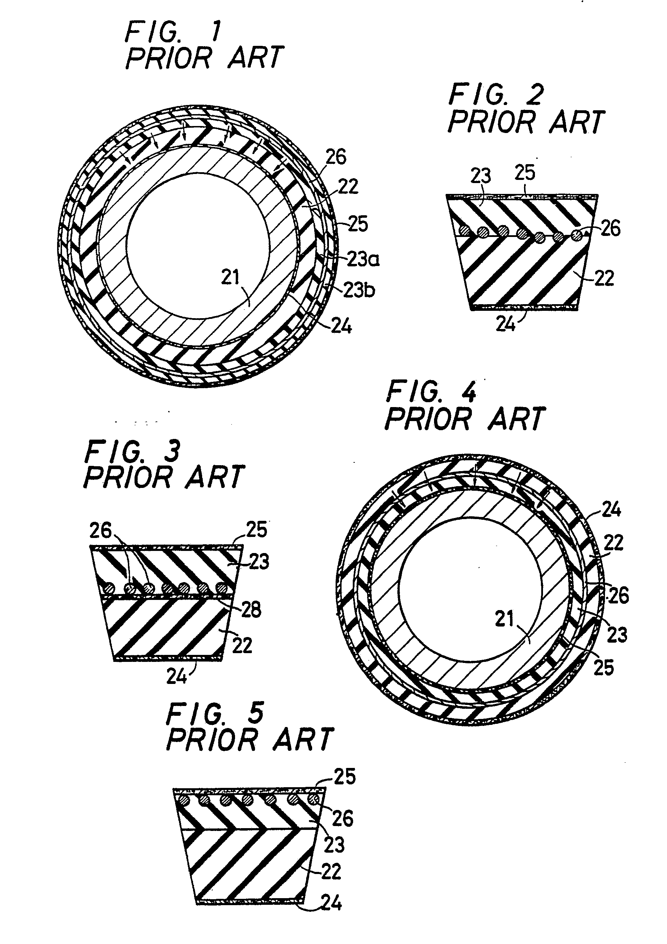

Referring first to Figure 1, in the first conventional manufacturing method, a few plys of rubberized canvas 24 are wound around a cylindrical metal mould 21. An unvulcanized rubber sheet 22 is laminated onto the rubberized canvas 24, and an unvulcanized rubber sheet 23a is in turn laminated onto the rubber sheet 22. Then, an elongate tensile member 26 made of polyester fibres and having a large thermal contration stress is would spirally around the rubber sheet 23a. Thereafter, a further unvulcanized rubber sheet 23b and a canvas covering comprising several plys of rubberized canvas 25 are wound in succession over the tensile member 26 to form a belt blank. The belt blank is then externally pressurized and heated so as to cause *inter alia* melting of the rubber sheets 23a and 23b. The resultant structure after cooling is cut into a plurality of rings to produce respective V-belts, with the rubber sheet 22 forming a compression section of the belt and the rubber sheets 23a and 23b forming a tension section thereof.

In this method of manufacture, the elongate tensile member 26 is embedded between the rubber sheets 23b and 23a as the latter flow under the application of heat and pressure. However, the amount of rubber flowing between the windings of the member 26 is very small, and the degree of friction obtained by the flow of rubber is therefore also small. It is thus difficult to activate the surface of the member 26. Also, various blending chemicals and softeners are mixed in the rubber sheets 23b and 23a before vulcanization, as a result of which the adhesion properties of their surfaces are unsatisfactory. This factor, taken in combination with the elongate member 26 having an inert surface, means that it is difficult to bond the member 26 to the rubber.

Furthermore, the elongate member 26 is wound around the rubber sheet 23a and contracts during vulcanization. This causes the member 26 to contract radially or "drop" through the rubber sheet 23a, as indicated by arrows in Figure 1, and possibly also partially through the rubber sheet 22.

Thus, as shown in Figure 2, the arrangement of the windings of the elongate member 26, i.e. the pitch line thereof, becomes irregular. Accordingly, tension is non-uniformly applied to the windings of the member 26, which may cause the belt to fail prematurely.

In order to eliminate the "dropping" of the elongate member 26 caused by its thermal contraction, a method may be employed in which, as shown in Figure 3, a reinforcing canvas layer 28 is provided between the rubber sheets 22 and 23a to prevent the member 26 from dropping into the rubber sheet 22. In this case, however, the member 26 still "drops" to the radially inner part of the rubber sheet 23a and comes into contact with the reinforcing canvas 28. Therefore, the reinforcing canvas may separate the belt into layers.

Figure 4 illustrates a so-called reversal method of belt manufacture, in which a canvas covering in the form of a rubberized canvas 25, a rubber sheet 23, an elongate tensile member 26, a rubber sheet 22 and a further rubberized canvas 24 are wound in succession onto a metal mould 21 to form a belt blank. The belt blank is then pressurized and heated *inter alia* to melt the rubber, and the resultant structure after cooling is cut into a plurality of rings. These rings are turned inside out to produce respective V-belts. In this manufacturing method, it is again difficult to prevent the elongate tensile member from "dropping" through the rubber sheet 23a in the manner indicated by arrows. As a result the member 26 comes into contact with the rubberized canvas 25, as shown in Figure 5. The problems described above in relation to Figures 1 to 3 may thus also be caused with respect to the surface where the elongate tensile member is provided.

In the conventional manufacturing methods described above in relation to Figures 3 to 5, substantially no volume of rubber remains between the elongate tensile member and the reinforcing canvas or the rubberized canvas in the finished belt, i.e. the longate tensile member is in direct contact with the canvas, and therefore the adhesion properties of the member are lowered. This may result in the elongate tensile member peeling off during operation of the belt. Thus, the conventional manufacturing methods described above are still disadvantageous in many respects.

The present invention seeks to obviate or mitigate the above-described difficulties, and to provide a V-belt having superior performance characteristics.

To this end, the present invention provides a V-belt of the above-described type in which the elongate tensile portions are embedded between the rubber layer forming the tension section and the ridges so that they are in contact with portions of the canvas covering which are disposed in said recesses, the tensile portions having a differential thermal contraction stress between 100°C and 20°C of at least 3.5 g/denier (0.31 N/tex).

It is to be noted that a power transmission belt wherein elongate tensile portions are embedded between a rubber layer and transverse ridges and are in contact with a canvas covering on the ridges is already known from DE—B—1107033. In this belt, however, the elongate tensile portions do not have the differential thermal contraction stress required by the present invention.

The rubber layer forming the compression section may have embedded therein short fibres which are oriented transversely of the V-belt, and a surface of this rubber layer remote from the rubber layer forming the tension section (which surface constitutes a radially inner surface of the V-belt in use) may have laminated thereon at least one ply of rubberized canvas or rubber sheet.

The provision of the ridges improves the bending characteristics of the belt. Although a canvas covering is bonded to the outer surface of the belt, it does not affect the bending characteristics because it is sufficiently stretchable in the longitudinal direction of the belt. The ridges also improve the widthwise rigidity of the belt. Moreover, because the ridges provide a volume of rubber between the tensile portions and the canvas covering, no peeling occurs and the adhesion property is improved.

An embodiment of the present invention will now be described, by way of example, with reference to the remainder of the accompanying drawings, in which:—

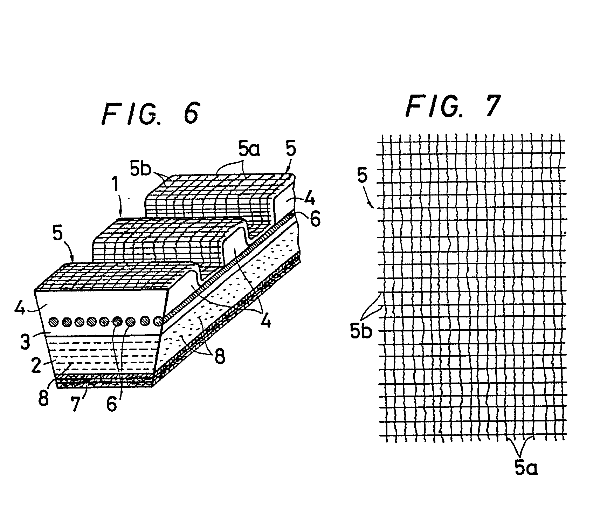

Figure 6 is a perspective view of a section of a V-belt according to the present invention;

Figure 7 is a plan view of a canvas covering which forms part of the V-belt shown in Figure 6;

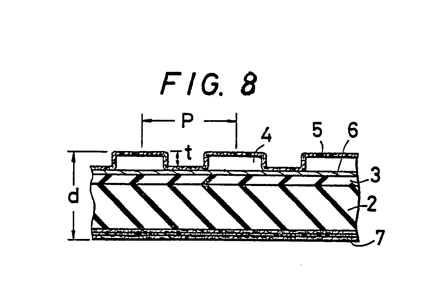

Figure 8 is a schematic view of a longitudinal section of the V-belt shown in Figure 6.

Referring first to Figure 6, the V-belt shown therein is designated generally by reference numeral 1 and comprises a compression section formed by a rubber layer 2, and a tension section formed by a rubber layer 3 which is laminated on the rubber layer 2. The rubber layer 3 has a Shore hardness of 60° to 80° higher than that of rubber ordinarily used for this purpose to give lateral rigidity to the belt. Each of the rubber layers 2 and 3 is made of a heatproof synthetic rubber, such as polychloroprene rubber (CR), nitrile butadiene rubber (NBR) or a blend of these two rubbers, or a coldproof rubber such as a blend of natural rubber (NR) and styrene butadiene rubber (SBR) or a blend of polychloroprene rubber (CR) and butyl rubber (BR). The coldproof rubber would normally be used at temperatures of —30°C to —40°C, for example, where there is a danger than a heatproof synthetic rubber would harden and deteriorate to an extent which renders the belt unusable. Preferably, the layers 2 and 3 are made of the same rubber.

A surface of the rubber layer 3 remote from the rubber layer 2 is provided with a series of cogs or ridges 4 thereon which extend transversely of the direction of extent of the belt 1. The ridges 4 are provided at regular intervals $p$ along the length of the belt, and are of equal height $t$ (see Figure 8). A canvas covering 5 is provided over the ridges 4 and the recesses therebetween, and is arranged to be stretchable only in the direction of extent of the belt 1. The canvas covering 5 is made frictional with a heatproof synthetic rubber or a coldproof rubber similar to those described above in relation to the layers 2 and 3.

A series of elongate tensile portions 6 are embedded between the rubber layer 3 and the ridges 4 so that they contact portions of the canvas covering 5 which are disposed in the recesses between the ridges 4. As will be exp'ained later, the tensile portions 6 are formed from a single spirally-wound member, and extend longitudinally of the belt 1 in parallel, equi-spaced relation. A rubberized canvas 7 is laminated onto a surface of the rubber layer 2 remote from the rubber layer 3, and forms an inner surface of the belt 1 in use. The canvas 7 is a bias cotton canvas in which the warps form an angle of 90° to 150° with the wefts and is made frictional with polychloroprene rubber (CR) or nitrile butadiene rubber (NBR). The number of plys in the canvas 7 is not restricted to one, and can be from two to five according to the operating conditions of the belt. As an alternative to a bias canvas the canvas 7 can comprise a stretchable canvas. In addition, according to the operating conditions, the rubberized canvas 7 may be replaced by a rubber sheet, or may even be dispensed with altogether.

In order to improve the side-pressure durability and the wear resistance of the belt, short fibres 8 are embedded in the rubber layer 2 of the compression section and are oriented transversely of the direction of extent of the belt 1. The fibres 8 are obtained by cutting natural fibres (such as cotton threads), synthetic fibres (such as nylon, tetron, vinylon and rayon) or non-organic fibres (such as glass fibres) into lengths of 5mm to 10mm. Preferably, the fibres are present in the rubber layer 2 in a proportion of 10% to 30% by weight (i.e. 10 to 30 parts by weight of short fibres to 100 parts by weight of rubber).

Referring now back to the ridges 4, the values of their separation or pitch $p$ and their height $t$ are related to the overall thickness $d$ of the belt 1 as follows:—

$$1.5t < p < 3.5t \qquad (A)$$

$$0.12d < t < 0.4d \qquad (B)$$

With reference to relation (A), if the value of $p$ is made less than the lower limit of 1.5t, then the ridges 4 will be of elongated configuration, as a result of which the lateral rigidity of the belt will be reduced and the ridges may be broken and scattered during operation of the belt. If, on the other hand, the value of $p$ is made greater than the upper limit of 3.5t, then the tensile member 6 will assume a polygonal section when wound upon a mould during the manufacture of the belt. This will cause the pitch line of the belt to pulsate on the pulley or the like during operation, resulting in vibration of the belt and the generation of heat.

With reference to relation (B), if the value of $t$ is made less than the lower limit of 0.12d, then the height of the ridges will be reduced so much that their reinforcement effect is decreased, resulting in a decrease in the service life of the belt. Furthermore, the belt itself will become curved or deformed laterally when located in a groove of the pulley or the like, as a result of which stress will be concentrated on the windings of the tensile portions 6 adjacent the sides of the belt, which will also decrease the service life of the belt. If, on the other hand, the value of $t$ is made greater than the upper limit of 0.4d, then the pitch line of the tensile portion 6 will necessarily be lowered. Hence, the number of effective tensile portions and the effective power-transmitting area will be reduced, thus decreasing the power-transmitting force of the belt.

As mentioned above, the canvas covering 5 is arranged to be stretchable only in the direction of extent of the belt. One example of such a canvas is shown in Figure 7, and is obtained by weaving curled nylon warps 5a which have been subjected to wooly treatment and ordinary nylon wefts 5b. The warps 5a, which are stretchable, are oriented longitudinally of the belt so that the latter can bend sufficiently in the longitudinal direction, while the ordinary nylon wefts 5b contribute to giving the belt widthwise rigidity.

The surfaces of the windings of the tensile portions 6 are subjected to adhesion treatment with an isocyanate group liquid and resorcinformalin latex (RFL) liquid, and are heat-set at 200°C. The tensile portions 6 have a thermal contraction stress of 0 g/denier at room temperature (20°C) and 3.5 g/denier (0.31 N/tex) at 100°C. That is, the tensile portions have such a great thermal contraction stress that the difference between their thermal contraction stress at 100°C and that at 20°C is 3.5 g/denier (0.31 N/tex). More specifically, the tensile portions are made of polyester fibres or polyamide fibres which meet the above-described condition. The difference between the thermal contraction stress at 100°C and that at 20°C of the tensile portions 6 is an essential aspect of the V-belt. If this difference is made less than 3.5 g/denier (0.31 N/tex), then the thermal contraction stress of the tensile portions cannot react sufficiently to the generation of heat during operation to prevent elongation and consequential slipping of the belt.

As described above, a rubberized canvas 7 can be bonded in lamination onto the rubber layer 2 of the compression section in order to improve the side pressure durability (rigidity) of the belt. A suitable canvas for this purpose is obtained as follows. A stretchable canvas of the same type as the canvas covering 5 shown in Figure 7 is subjected to adhesion treatment, and one or both surfaces thereof are covered with a rubber layer of predetermined thickness and of similar quality to that of the rubber layer 2. The canvas is then bonded to the inner surface of the belt in such a manner that the curled nylon warps (corresponding to the warps 5a in Figure 7) are oriented in the longitudinal direction of the belt.

In the V-belt described above, the rubber layers 2 and 3 are made of CR, NBR, or a CR—NBR blend, which have excellent heat resistance, or are made of an NR—SBR blend or a CR—BR blend in order to protect the belt from hardening and deterioration in cold conditions. Therefore, the V-belt can be most effectively employed in equipment such as automobiles in which heat is frequently generated as a result of the high-speed operation of the belt. The service life of the belt is therefore increased. Moreover, the tensile portions 6 are made of a material (such as polyester fibres or polyamide fibres) which has excellent thermal contraction characteristics. Accordingly, the tensile portions 6 can immediately contract in response to the heat generated when the belt is run at high speed and is repeatedly bent, or to the heat generated by friction due to the slip of the belt on the pulley. Thus, the tensile portions automatically tighten the belt, and therefore it is unnecessary to manually adjust the tension of the belt.

As described above, the series of ridges on the outer surface of the belt improve the bending characteristics of the belt and, although the canvas covering 5 is bonded to the surface of the belt, it does not affect the bending characteristics because it is sufficiently stretchable in the longitudinal direction of the belt.

In the case of a power-transmitting belt, especially a V-belt, the belt is liable to be depressed deeply into the groove of a pulley. As a result, the belt is curved greatly widthwise. The provision of the ridges increases the widthwise rigidity of the belt. Since the entire outer surface of the belt including the ridges is covered by the canvas covering 5, the rigidity of the ridges 4 is increased, which achieves significant suppression of widthwise deformation of the belt. The ridges 4 and only one sheet of canvas covering 5 prevent deformation of the belt which may be caused by side pressure applied thereto.

The tensile portions 6 are embedded in the belt in such a manner that they contact those portions of the canvas covering 5 which are disposed in the recesses between the ridges 4: moreover, the tensile portions 6 are arranged regularly on a common pitch line and in a cylindrical state. Therefore, the tensile portions can expand and contract uniformly, thereby eliminating the generation of local fatigue and enabling the belt to be used in a stable fashion. Furthermore, the canvas covering 5 is given a friction surface with the same material as that of the body of the belt, thereby markedly improving the adhesion properties of the canvas covering 5. This, coupled with the fact that some parts of the tensile portions contact the canvas covering 5 while other parts thereof are completely embedded below the ridges 4, effectively eliminates the phenomenon of peeling.

The fact that the rubber layer 3 of the tension section is higher in hardness and rigidity than rubber which is ordinarily used for this purpose and the provision of the short fibres in the rubber layer 2 of the compression section render the belt excellent in both side pressure durability and wear resistance.

Comparative Example

A V-belt according to the invention and a V-belt obtained by the conventional manufacturing method illustrated in Figure 1 were subjected to a running test. Both of the V-belts included polyester fibre elongate tensile members of equal diameter. As a result of the running test, it was found that the tension of the conventionally manufactured V-belt was significantly reduced and it was necessary to adjust the tension of the V-belt after a run of approximately 40,000 km. The reason for this was that the elongate tensile member had "dropped" through the rubber layer forming the tension section of the belt during vulcanization. As a result the elongate tensile member had become loose: that is, the thermal contraction stress of the elongate tensile member had been reduced, and at worst the arrangement of the elongate tensile member had been made irregular. Under these conditions, if the elongate tensile member becomes loosened to such an extent that sufficient thermal contraction stress is not obtained during operation of the belt, then the tension of the belt is reduced and it is necessary frequently to adjust the belt tension. Where the arrangement of the windings of the elongate tensile member becomes irregular, the latter cannot bear stress uniformly, and therefore the belt will be quickly broken.

On the other hand, the tension of the V-belt according to the present invention was not noticeably reduced even after the running test, and was maintained at a level higher than the threshold level at which the belt might slip. The durability of the V-belt according to the present invention was found to be more than twice that of the conventional V-belt.

From the above it will be apparent that, in the V-belt according to the invention, the elongate tensile portions are regularly arranged on a common pitch line, and when heat is generated in the belt by slippage during its operation, these portions undergo uniform thermal contraction and automatically maintain the tension of the belt unchanged. It is therefore unnecessary to provide a separate tensioning device for maintaining the belt in proper tension.

## Claims

1. A V-belt comprising a compression section formed by a rubber layer (2), a tension section formed by a rubber layer (3) laminated onto the rubber layer (2) forming the compression section, a plurality of ridges (4) on a surface of the tension section remote from the compression section and extending transversely of the V-belt, a canvas covering (5) which is disposed over the ridges (4) and the recesses therebetween and which is stretchable longitudinally of the V-belt, and elongate tensile portions (6) embedded in the V-belt and extending longitudinally thereof in mutually parallel, equispaced relation, characterised in that the elongate tensile portions (6) are embedded between the rubber layer (3) forming the tension section and the ridges (4) so that they are in contact with portions of the canvas covering (5) which are disposed in said recesses, the tensile portions (6) having a differential thermal contraction stress between 100°C and 20°C of at least 3.5 g/denier (0.31 N/tex).

2. A V-belt as claimed in claim 1, wherein short fibres (8) are embedded in the rubber layer (2) forming the compression section and are oriented transversely of the V-belt.

3. A V-belt as claimed in claim 2, wherein the short fibres (8) are present in the said rubber layer (2) in an amount of from 10% to 30% by weight.

4. A V-belt as claimed in claim 1, 2 or 3, wherein a surface of the compression section formed by the rubber layer (2) remote from the tension section formed by the rubber layer (3) has laminated thereon at least one ply of rubberized canvas (7) or a rubber sheet.

5. A V-belt as claimed in claim 4, wherein the rubberized canvas (7) is a bias canvas.

6. A V-belt as claimed in claim 4 or 5, wherein the rubberized canvas (7) is stretchable and is composed of curled nylon warps which have been subjected to wooly treatment interwoven with ordinary nylon wefts.

7. A V-belt as claimed in any preceding claim, wherein the canvas covering (5) is composed of curled nylon warps (5a) which have been subjected to wooly treatment interwoven with ordinary nylon wefts (5b), the warps (5a) extending longitudinally of the V-belt.

8. A V-belt as claimed in any preceding claim, wherein the ridges (4) are provided at substantially equal intervals $p$ along the V-belt and are of substantially equal height $t$, the values of $p$ and $t$ being related to the overall thickness $d$ of the V-belt as follows:—

$$1.5t < p < 3.5t$$

$$0.12d < t < 0.4d$$

9. A V-belt as claimed in any preceding claim, wherein the elongate tensile portions (6) are made of polyester or polyamide fibres.

10. A V-belt as claimed in any preceding claim, wherein the tension section and/or the compression section is or are made of heatproof rubber.

11. A V-belt as claimed in any one of claims 1 to 10, wherein the tension section and/or the compression section is or are made of coldproof rubber.

12. A V-belt as claimed in any preceding claim, wherein the tension section and/or the compression section is or are made of polychloroprene rubber (CR).

13. A V-belt as claimed in any one of claims 1 to 11, wherein the tension section and/or the compression section is or are made of nitrile butadiene rubber (NBR).

14. A V-belt as claimed in any one of claims 1 to 11, wherein the tension section and/or the compression section is or are made of a blend of polychloroprene rubber (CR) and nitrile butadiene rubber (NBR).

15. A V-belt as claimed in any one of claims 1 to 11, wherein the tension section and/or the compression section is or are made of a blend of natural rubber (NR) and styrene butadiene rubber (SBR).

16. A V-belt as claimed in any one of claims 1 to 11, wherein the tension section and/or the compression section is or are made of a blend of polychloroprene rubber (CR) and butyl rubber (BR).

17. A V-belt as claimed in any preceding claim, wherein the Shore hardness of the rubber layer (3) forming the tension section is from 60° to 80°.

## Patentansprüche

1. Keilriemen mit einem von einer Gummischicht (2) gebildeten Kompressionsteil, mit einem Dehnungsteil, der von einer auf die den Kompressionsteil bildenden Gummischicht (2) aufgelegten Gummischicht (3) gebildet ist, mit einer Mehrzahl von quer zum Keilriemen verlaufenden Rippen (4) an einer von dem Kompressionsteil entfernten Fläche des Dehnungsteils, mit einer Gewebeabdeckung (5), die über den Rippen (4) und den dazwischen befindlichen Vertiefungen angeordnet und längs des Keilriemens dehnbar ist, und mit langgestreckten Zugteilen (6), die in dem Keilriemen eingebettet sind und in dessen Längsrichtung in einer zueinander parallelen abstandsgleichen Anordnung verlaufen, dadurch gekennzeichnet, daß die langgestreckten Zugteile (6) zwischen der den Dehnungsteil bildenden Gummischicht (3) und den Rippen (4) so eingebettet sind, daß sie mit in den genannten Vertiefungen angeordneten Teilen der Gewebeabdeckung (5) in Berührung sind, und daß die Zugteile (6) eine differentielle thermische Schrumpfspannung zwischen 100°C und 20°C von wenigstens 3,5 g/denier (0,31 N/tex) aufweisen.

2. Keilriemen nach Anspruch 1, in welchem kurze Fasern (8) in der den Kompressionsteil bildenden Gummischicht (2) eingebettet und quer zum Keilriemen orientiert sind.

3. Keilriemen nach Anspruch 2, in welchem die kurzen Fasern (8) in der genannten Gummischicht (2) in einer Menge von 10 bis 30 Gewichtsprozenten vorliegen.

4. Keilriemen nach Anspruch 1, 2 oder 3, in welchem eine Oberfläche des von der Gummischicht (2) gebildeten Kompressionsteils, die von dem von der Gummischicht (3) gebildeten Dehnungsteil entfernt ist, mit wenigstens einer darauf aufgelegten Lage gummierten Gewebes (7) oder einer Gummiplatte versehen ist.

5. Keilriemen nach Anspruch 4, in welchem das gummierte Gewebe (7) ein schräg verlaufendes Gewebe ist.

6. Keilriemen nach Anspruch 4 oder 5, in welchem das gummierte Gewebe (7) dehnbar ist und aus gekräuselten Nylon-Kettfäden besteht, die einer Kräuselbehandlung unterworfen wurden und mit gewöhnlichen Nylon-Schußfäden zusammengewoben sind.

7. Keilriemen nach irgendeinem vorhergehenden Anspruch, in welchem die Gewebeabddeckung (5) aus gekräuselten Nylon-Kettfäden (5a) besteht, die einer Kräuselbehandlung unterworfen wurden und mit gewöhnlichen Nylon-Schußfäden (5b) zusammengewoben sind, wobei die Kettfäden (5a) sich längs des keilriemens erstrecken.

8. Keilriemen nach irgendeinem vorhergehenden Anspruch, in welchem die Rippen (4) mit im wesentlichen gleichen Abständen *p* entlang dem Keilriemen angeordnet sind und eine im wesentlichen gleiche Höhe *t* aufweisen, wobei die Werte von *p* und *t* zur Gesamtdicke *d* des Keilriemens in folgender Beziehung stehen:

$$1{,}5t < p < 3{,}5t$$

$$0{,}12d < t < 0{,}4d$$

9. Keilriemen nach irgendeinem vorhergehenden Anspruch, in welchem die langgestreckten Zugteile (6) aus Polyester- oder Polyamidfasern hergestellt sind.

10. Keilriemen nach irgendeinem vorhergehenden Anspruch, in welchem der Dehnungsteil und/oder der Kompressionsteil aus einem hitzebeständigen Gummi hergestellt sind bzw. ist.

11. Keilriemen nach irgendeinem der Ansprüche 1 bis 10, in welchem der Dehnungsteil und/oder Kompressionsteil aus einem kältebeständigen Gummi hergestellt sind bzw. ist.

12. Keilriemen nach irgendeinem vorhergehenden Anspruch, in welchem der Dehnungsteil und/oder der Kompressionsteil aus Polychloropren-Kautschuk (CR) hergestellt sind bzw. ist.

13. Keilriemen nach irgendeinem der Ansprüche 1 bis 11, in welchem der Dehnungsteil und/oder der Kompressionsteil aus Nitril-Butadien-Kautschuk (NBR) hergestellt sind bzw. ist.

14. Keilriemen nach irgendeinem der Ansprüche 1 bis 11, in welchem der Dehnungsteil und/oder der Kompressionsteil aus einem Verschnitt von Polychloropren-Kautschuk (CR) und Nitril-Butadien-Kautschuk (NBR) hergestellt sind bzw. ist.

15. Keilriemen nach irgendeinem der Ansprüche 1 bis 11, in welchem der Dehnungsteil und/oder der Kompressionsteil aus einem Verschnitt von Naturkautschuk (NR) und Styrol-Butadien-Kautschuk (SBR) hergestellt sind bzw. ist.

16. Keilriemen nach irgendeinem der Ansprüche 1 bis 11, in welchem der Dehnungsteil und/oder der Kompressionsteil aus einem Verschnitt von Polychloropren-Kautschuk (CR) und Butylkautschuk (BR) hergestellt sind bzw. ist.

17. Keilriemen nach irgendeinem der vorhergehenden Ansprüche, in welchem die Shore-Härte der den Dehnungsteil bildenden Gummischicht (3) zwischen 60° und 80° beträgt.

**Revendications**

1. Courroie trapézoïdale comprenant un tronçon en compression formé par une couche de caoutchouc (2), un tronçon en tension formé par une couche de caoutchouc (3) collée à la couche de caoutchouc (2) formant le tronçon en compression, plusieurs nervures (4) disposées sur une surface du tronçon en tension qui est opposée au tronçon en compression et disposées transversalement à la courroie trapézoïdale, un recouvrement de toile (5) placé sur les nervures (4) et les cvatiés qui les séparent et qui peut s'allonger suivant la longueur de la courroie trapézoïdale, et des parties allongées en tension (6) enrobées dans la courroie trapézoïdale dans la direction longitudinale de celle-ci, ces parties étant parallèles les unes aux autres et équidistantes, caractérisée en ce que les parties allongées en tension (6) sont enrobées entre la couche de caoutchouc (3) formant le tronçon en tension et les nervures (4) si bien qu'elles sont au contact de parties du recouvrement (5) de toile qui sont placées dans les cavités, les parties en tension (6) ayant une contrainte de contraction thermique différentielle entre 100°C et 20°C qui est d'au moins 3,5 g/denier (0,31 N/tex).

2. Courroie trapézoïdale selon la revendication 1, dans laquelle de courtes fibres (8) sont enrobées dans la couche de caoutchouc (2) formant le tronçon en compression et sont orientées transversalement à la courroie trapézoïdale.

3. Courroie trapézoïdale selon la revendication 2, dans laquelle les courtes fibres (8) sont présentes dans la couche de caoutchouc (2) en quantité comprise entre 10 et 30 % en poids.

4. Courroie trapézoïdale selon l'une quelconque des revendications 1 à 3, dans laquelle une surface du tronçon en compression formé par la couche de caoutchouc (2) opposée au tronçon en tension formé par la couche de caoutchouc (3) porte au moins une épaisseur de toile caoutchoutée (7) ou de feuille de caoutchouc qui lui est collée.

5. Courroie trapézoïdale selon la revendication 4, dans laquelle la toile caoutchoutée (7) est une toile en biais.

6. Courroie trapézoïdale selon l'une des revendications 4 et 5, dans laquelle la toile caoutchoutée (7) peut s'allonger et est composée de chaînes bouclées de "Nylon" qui ont été soumises à un traitement de lainage, tissées à des trames ordinaires de "Nylon".

7. Courroie trapézoïdale selon l'une quelconque des revendications précédentes, dans laquelle le recouvrement de toile (5) est composé de chaînes bouclées de "Nylon" (5a) qui ont été soumises à un traitement de lainage, tissées à des trames ordinaires de "Nylon" (5b), les chaînes (5a) étant disposées suivant la longueur de la courroie trapézoïdale.

8. Courroie trapézoïdale selon l'une quelconque des revendications précédentes, dans laquelle les nervures (4) sont disposées à des intervalles sensiblement égaux p le long de la courroie trapézoïdale et ont une hauteur pratiquement identique t, les valeurs de t et p étant reliées à l'épaisseur totale d de la courroie trapézoïdale de la manière suivante:

$$1,5t < p < 3,5t$$

$$0,12d < t < 0,4d$$

9. Courroie trapézoïdale selon l'une quelconque des revendications précédentes, dans laquelle les parties allongées en tension (6) sont formées de fibres de polyester ou de polyamide.

10. Courroie trapézoïdale selon l'une quelconque des revendications précédentes, dans laquelle le tronçon en tension et/ou le tronçon en compression sont formés de caoutchouc résistant à la chaleur.

11. Courroie trapézoïdale selon l'une quelconque des revendications 1 à 10, dans laquelle le tronçon en tension et/ou le tronçon en compression sont formés de caoutchouc résistant au froid.

12. Courroie trapézoïdale selon l'une quelconque des revendications précédentes, caractérisée en ce que le tronçon en tension et/ou le tronçon en compression sont formés de caoutchouc de polychloroprène (CR).

13. Courroie selon l'une quelconque des revendications 1 à 11, dans laquelle le tronçon en tension et/ou le tronçon en compression sont formés d'un caoutchouc nitrile et de butadiène (NBR).

14. Courroie trapézoïdale selon l'une quelconque des revendications 1 à 11, dans laquelle le tronçon en tension et/ou le tronçon en compression sont formés d'un mélange de caoutchouc de polychloroprène (CR) et de caoutchouc nitrile et de butadiène (NBR).

15. Courroie trapézoïdale selon l'une quelconque des revendications 1 à 11, dans laquelle le tronçon en tension et/ou le tronçon en compression sont formés d'un mélange de caoutchouc naturel (NR) et de caoutchouc de butadiène-styrène (SBR).

16. Courroie trapézoïdale selon l'une quelconque des revendications 1 à 11, caractérisée en ce que le tronçon en tension et/ou le tronçon en compression sont formés d'un mélange de caoutchouc de polychloroprène (CR) et de caoutchouc butyle (BR).

17. Courroie trapézoïdale selon l'une quelconque des revendications précédentes, dans laquelle la dureté Shore de la couche de caoutchouc (3) formant le tronçon en tension est comprise entre 60° et 80°.

*FIG. 1*
*PRIOR ART*

26
22
25
23a
23b
24
21

*FIG. 2*
*PRIOR ART*

23    25
26
22
24

*FIG. 4*
*PRIOR ART*

24
22
26
21
23
25

*FIG. 3*
*PRIOR ART*

26    25
23
28
22
24

*FIG. 5*
*PRIOR ART*

25
26
23
22
24

1

FIG. 6

FIG. 7

FIG. 8